# EUROPÄISCHE PATENTSCHRIFT

(11) **EP 2 226 107 B1**
(45) Veröffentlichungstag und Bekanntmachung des Hinweises auf die Patenterteilung: **04.04.2012**
(21) Anmeldenummer: 10152721.6
(22) Anmeldetag: 05.02.2010
(51) Int. Cl.: B01D 29/11, B01D 29/58, B01D 36/00, B01D 17/04, F02M 37/22

(54) **Wasserabscheider insbesondere für Kraftstoffzuführsysteme von Brennkraftmaschinen in Kraftfahrzeugen**
Water separator, in particular for fuel supply systems of combustion engines in motor vehicles
Séparateur d'eau, notamment pour systèmes d'entrée de carburant de moteurs à combustion interne dans des véhicules automobiles

(30) Priorität: 18.02.2009 DE 102009009420
(43) Veröffentlichungstag der Anmeldung: 08.09.2010
(73) Patentinhaber: MANN + HUMMEL GMBH, 71638 Ludwigsburg (DE)
(72) Erfinder: Veit, Martin, 71116, Gärtringen (DE); Kiedaisch, Steffi, 73037, Göppingen (DE); Klein, Martin, 70597, Stuttgart (DE)

(56) Entgegenhaltungen:
- WO-A1-98/14257
- DE-A1- 4 343 754
- DE-A1-102006 051 406
- DE-B- 1 044 327

## Beschreibung

### Technisches Gebiet

Die Erfindung betrifft einen Wasserabscheider, insbesondere für Kraftstoffzuführsysteme von Brennkraftmaschinen in Kraftfahrzeugen der im Oberbegriff des Anspruchs 1 angegebenen Gattung.

### Stand der Technik

Vorrichtungen zum Abscheiden von Wasser aus dem Kraftstoff in Kraftstoffzuführsystemen werden häufig mit einem Kraftstofffilter kombiniert. So ist aus der US 4,740,299 ein Kraftstofffilter bekannt, der in seinem Gehäuse einen Sammelraum für das aus dem Kraftstoff ausgeschiedene Wasser aufweist. Der Kraftstoff wird von oben in das Filtergehäuse zugeführt, wobei davon ausgegangen wird, dass die schwereren Wasseranteile im Kraftstoff nach unten sinken und in den Sammelraum gelangen. Ein Teil des im Kraftstoff emulgierten Wassers wird jedoch mit dem Kraftstoff durch das Filtermaterial getragen, so dass auch ausgangsseitig des Filters noch Wasser im Kraftstoff vorhanden ist.

In der EP 1 256 707 A2 ist ein Kraftstofffilter mit wasserabscheidenden Mitteln beschrieben. Dieser insbesondere für Dieselkraftstoffe eines Verbrennungsmotors dienende Kraftstofffilter umfasst zwei Filterstufen, wobei eine erste Filterstufe zur Partikelfiltration vorgesehen ist. Diese Filterstufe besteht aus einem hydrophilen Filtermaterial, welches die Eigenschaft besitzt, im Kraftstoff fein verteiltes Wasser zu größeren Wasserteilchenelementen koaleszieren zu lassen. In der ersten Filterstufe ist eine zweite Filterstufe aus einem hydrophoben Material nachgeschaltet, wobei sich diese zweite Filterstufe koaxial innerhalb der ersten Filterstufe befindet. Diese Anordnung ist deshalb gewählt, dass der die erste Filterstufe verlassende und Wasseranteile enthaltende Kraftstoff umlenkungsfrei auf das Material der letzten Filterstufe trifft. Für diese Art der Ausgestaltung eines Kraftstofffilters werden große Flächen des hydrophilen Materials der ersten Stufe sowie des hydrophoben Materials der zweiten Stufe benötigt.
Die DE 10 2006 051 406 A1 beschreibt einen Kraftstofffilter mit axial aufeinanderfolgenden, zylindrischem Koalszerelement und Partikelfilter.
Der DE 10 44 327 B ist eine Vorrichtung zur Entfernung emulgierten oder dispertierten Wassers und von Schmutzbestandteilen aus einem flüssigen Kohlenwasserstoff zu entnehmen, welche ein zweistufiges Abscheideelement aufweist. Die erste Abscheidestufe umfasst ein zylindrisches hydrophiles Medium, das von einer gelochten Metallhülse umgeben ist.
Die WO 98/14257 A1 beschreibt ein Koaleszerelement, welches ein zylindrisches Koalszermedium aufweist, das von einer eine Vielzahl von Durchtrittsöffnungen aufweisenden Hüllstruktur umgeben ist.

Der vorliegenden Erfindung liegt die Aufgabe zugrunde, einen Wasserabscheider der gattungsgemäßen Art zu schaffen, der einfach im Aufbau ist und mit dem eine definierte Tropfengröße an einer Abscheidestufe erzeugt wird.

Diese Aufgabe wird durch einen Wasserabscheider mit den Merkmalen des Anspruchs 1 gelöst.

### Offenbarung der Erfindung

Die Erfindung bietet den Vorteil, dass die koaleszierten Wassertröpfchen in einer definierten Tröpfchengröße aus dem Kraftstoff getrennt werden, was durch die Vielzahl der Durchtrittsöffnungen in dem das Filtermedium umgebenden Element erreicht wird. Das Element ist ein Lochblech, ein gelochter Kunststoff oder Keramik; alternativ sind aber auch engmaschige Siebe oder synthetische Gitter in Betracht zu ziehen.

Das in Form des Lochblechs, gelochten Kunststoffs, Keramik, engmaschigen Siebs oder synthetischen Gitters vorliegende Element wird als flüssigkeitsdurchlässige Halbschale ausgeführt, wobei zwei Halbschalen zusammenfügbar sind und auf diese Weise das Filtermedium der ersten Abscheidestufe umgeben. Die Halbschalen besitzen gemeinsam etwa die Form eines Zylinders. Die Halbschalen sind vorzugsweise mittels Rast- oder Clipsverbindungen miteinander verbunden, wobei ein Stützelement, das vom Filtermedium umgeben ist, zwischen Rändern der Halbschale eingespannt ist. Auf diese Weise ist eine Fixierung der ersten Abscheidestufe auf dem Stützelement gegeben.

Als Filtermedium ist vorzugsweise ein ein- oder mehrlagiges Material vorgesehen, wobei als Material, insbesondere Glasfasern oder ein synthetischer Schaum oder auch eine Kombination aus diesen in Betracht kommt. Das Material des Filtermediums weist vorzugsweise eine Dicke von mindestens 0,5 mm und maximal 30 mm auf. Als besonders geeignete Porengröße des Materials wird der Bereich vom 0,3 µm bis 500 µm angesehen.

Gemäß einer weiteren Ausgestaltung der Erfindung ist das hydrophyle Filtermedium auf einem mit radialen Öffnungen versehenen Stützkörper angeordnet, und das Element mit der Vielzahl von Durchtrittsöffnungen liegt unmittelbar an dem Filtermedium an. Das Element, welches das Filtermedium umgibt, weist vorzugsweise eine Dicke von < 5 mm auf. Die in dem Element vorhandenen Durchtrittsöffnungen sind zweckmäßigerweise rund, oval, n-eckig, nierenförmig, knochenförmig, kreis- oder halbkreisförmig. Die Gestaltung des Profils der Durchtrittsöffnungen in Durchströmungsrichtung ist vorzugsweise zylindrisch, konkav, konvex oder trichterförmig. Von Vorteil ist außerdem, dass die Oberfläche der Durchtrittsöffnungen bedingt durch den Herstellungsprozess oder durch eine nachträgliche Oberflächenbehandlung glatt ausgeführt ist.

Außerdem ist es im Hinblick auf die Tropfenbildung zweckmäßig, dass die Durchtrittsöffnungen eine Abrisskante aufweisen, deren Radius < 1 mm ist. Die durch die Durchtrittsöffnungen gebildete offene Fläche ist vorzugsweise < 20 mm². Die Durchtrittsöffnungen bilden zweckmäßigerweise in dem Element eine relative freie Fläche zwischen 15% und 65%. Es ist auch möglich, dass das Element mit den Durchtrittsöffnungen zu dem Filtermedium einen Abstand zwischen 0,1 mm und 5 mm aufweist.

### Kurze Beschreibung der Zeichnungen

Ausführungsbeispiele der Erfindung sind nachstehend anhand der Zeichnung näher erläutert. In der Zeichnung zeigt:

Figur 1 einen Längsschnitt durch ein als rohrförmiger Körper gestaltetes Gehäuse mit Abscheidekammer und Sammelraum,

Figur2 eine Darstellung mehrerer Komponenten eines Abscheideelementes, teilweise in Explosionsdarstellung,

Figur 3 eine Ausführungsvariante zu Figur 2,

Figur 4 einen Längsschnitt durch einen Wasserabscheider.

### Ausführungsform(en) der Erfindung

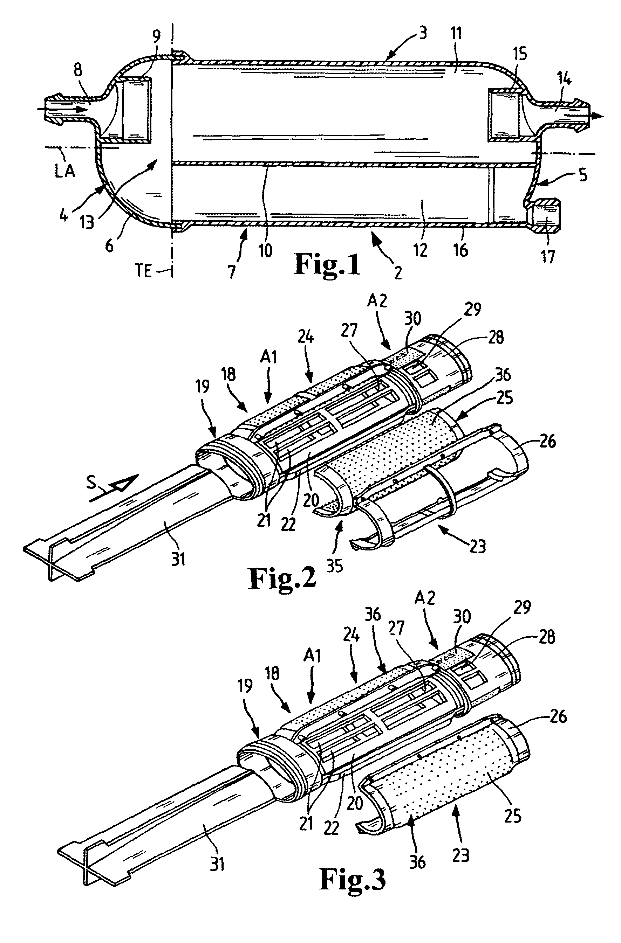

In Fig. 1 ist ein Gehäuse 2 dargestellt, das im Wesentlichen als rohrförmiger Körper 3 gestaltet ist, der eine Längsrichtung LA aufweist und an Enden 4, 5 jeweils etwa kugelabschnittförmig ausgebildet ist. Das Gehäuse 2 weist quer zur Längsrichtung LA eine Teilungsebene TE auf, so dass zwei Gehäuseteile 6, 7 durch Zusammenfügen an der Teilungsebene TE den rohrförmigen Körper 3 bilden. Die Teilungsebene TE liegt benachbart zu einem Zulauf 8, so dass das Gehäuseteil 6 etwa nur den Kugelabschnitt des Endes 4 umfasst, wohingegen das Gehäuseteil 7 den Hauptbestandteil des rohrförmigen Körpers 3 bildet. An der Innenseite des Gehäuseteils 6 ist ein Stutzen 9 angeordnet, der sich im Wesentlichen koaxial zum Zulauf 8 erstreckt und einstückig mit dem Gehäuseteil 6 ausgebildet ist.

Am anderen Ende 5 des Gehäuses 2 ist eine sich in Längsrichtung LA erstreckende Trennwand 10 angebracht, die etwas unterhalb der Mitte bis zur Trennebene TE verläuft. Die Trennwand 10 unterteilt auf diese Weise den Innenraum des Gehäuses 2 in eine Abscheidekammer 11 und einen Sammelraum 12, wobei lediglich im Bereich des Gehäuseteils 6 eine Öffnung 13 zur Verbindung zwischen Abscheidekammer 11 und Sammelraum 12 gegeben ist. Am Ende 5 befindet sich ein Ablauf 14 für den Kraftstoff, der in derselben Richtung wie der Zulauf 8 am anderen Ende 4 verläuft. An der Innenseite des Gehäuseteils 7 ist ein Stutzen 15 angeordnet, der sich mindestens annähernd koaxial zum Ablauf 14 erstreckt. An dem Gehäuseteil 7 ist an dem Ende 5 unterhalb des Ablaufs 14 unmittelbar über einem Boden 16 des Sammelraums 12 ein Wasserablaufstutzen 17 angeordnet. Das Gehäuseteil 7 ist vorzugsweise einstückig als Spritzgussteil mit der Trennwand 10, dem Ablauf 14, dem Stutzen und dem Wasserablaufstutzen 17 ausgeführt. Die Gehäuseteile 6, 7 bestehen bevorzugt aus Kunststoff und sind im Bereich der Trennebene verschweißt, wodurch eine dichte Verbindung erreicht wird, die resistent gegen Kraftstoff ist.

Die Fig. 2 zeigt ein Abscheideelement 18, das aus mehreren Komponenten besteht, wobei zum besseren Verständnis die Komponenten teilweise in Explosionsdarstellung gezeigt sind. Das Abscheideelement 18 ist als Rohrelement 19 konzipiert, und zwar im Hinblick auf eine liegende Anordnung in der in Fig. 1 dargestellten Abscheidekammer 11 im Gehäuse 2. Das Rohrelement 19 umfasst einen Stützkörper 20, an dem radiale Öffnungen 21 in Form von Längsschlitzen ausgebildet sind. Der Stützkörper 20 ist über die Länge der Längsschlitze von einem Filtermedium 22 umgeben, das von einem Element 35 umspannt ist, und mit diesem eine erste Abscheidestufe A1 bildet. Bei dem Element 35 handelt es sich beispielsweise um ein engmaschiges Sieb, Lochblech 36, synthetisches Gitter oder Gewebe und ist als Halbschale 23, 24 einer zylindrischen Form ausgeführt.

Die Halbschalen 23, 24 bestehen aus einem dünnwandigen, zu einem Halbzylinder 25 geformten Material und einem Rahmen 26, der sich über die Ränder des Halbzylinders 25 erstreckt. An den beiden Rahmen 26 können Clipse oder Rasten vorgesehen sein, um die beiden Halbschalen 23, 24 zu verbinden und somit eine Befestigung auf dem Stützkörper 20 zu bewirken. Die Fertigung der Halbschalen 23, 24 jeweils aus zwei separaten Teilen, nämlich dem Halbzylinder 25 und dem Rahmen 26, bietet die Möglichkeit der Materialkombination aus Kunststoff und Metall, die Halbschalen können aber auch materialeinheitlich hergestellt sein.

In dem Stützkörper 20 ist eine quer zu dessen Längsrichtung stehende Trennwand 27 angeordnet, die sich in geringem Abstand zu dem in Strömungsrichtung S des Kraftstoffs hinteren Ende der Öffnungen 21 befindet. In den Innenraum des Stützkörpers 20 wird ein Element 31 zur Strömungsführung eingesetzt, das so weit in den Stützkörper 20 eingeschoben wird, bis es an der Trennwand 27 anliegt. Das Element 31 ist so gestaltet, dass der Strömungsquerschnitt innerhalb des Stützkörpers 20 in Strömungsrichtung S reduziert wird. Auf diese Weise ergibt sich eine gleichmäßige Beaufschlagung der ersten Abscheidestufe A1 über deren gesamte Länge.

Hinter dem Stützkörper 20 schließt sich auf der anderen Seite der Trennwand 27 ein Rohrabschnitt 28 an, in dem radiale Aussparungen 29 vorgesehen sind. Der Rohrabschnitt 28 ist von einem Abscheidevlies 30, das die Aussparungen 29 überspannt, umgeben. Das Abscheidevlies 30 besteht aus einem hydrophoben Material und bildet auf diese Weise eine zweite Abscheidestufe A2. Die Maschenweite des Abscheidevlies 30 kann beispielsweise zwischen 5 µm und 500 µm betragen.

In Fig. 3 ist eine Ausführungsvariante zu Fig. 2 gezeigt mit einem Abscheideelement 18, das sich von demjenigen der Fig. 2 dadurch unterscheidet, dass die Halbzylinder 25 und Rahmen 26 der Halbschale 23 einerseits und Halbschale 24 andererseits einstückig ausgebildet sind und somit auch materialeinheitlich entweder aus Kunststoff oder Metall bestehen. Alle übrigen Merkmale in Fig. 3 stimmen mit denjenigen der Fig. 2 überein, so dass für gleiche Teile auch die Bezugszeichen identisch sind.

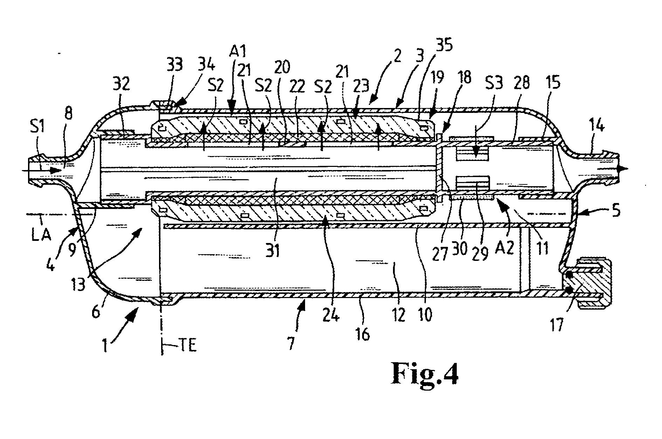

Die Fig. 4 zeigt einen Längsschnitt durch einen fertig montierten Wasserabscheider 1. Dabei besteht das Gehäuse 2 aus dem Gehäuseteil 6, 7, die den rohrförmigen Körper 3 bilden, dessen Innenraum durch die in Längsrichtung LA des Gehäuses 2 verlaufende Trennwand 10 in die Abscheidekammer 11 und den Sammelraum 12 unterteilt ist. In der Abscheidekammer 11 befindet sich das Abscheideelement 18 in Form eines Rohrelementes 19. Das Rohrelement 19 umfasst den Stützkörper 20 und den Rohrabschnitt 28, die fluchtend hintereinander angeordnet sind. Auf dem Stützkörper 20 befindet sich das Filtermedium 22 sowie das Element 35 mit der Vielzahl von Durchtrittöffnungen. An dem in Fig. 4 linken Ende des Stützkörpers 20 ist eine Hülse 32 angeformt, die bezüglich ihres Außenumfangs auf das Innenmaß des Stutzens 9 am Zulauf 8 abgestimmt und in diesem aufgenommen ist. Das rechte Ende des Rohrabschnitts 28 ist dem Innenmaß des Stutzens 15 am Ablauf 14 angepasst und in diesem gehalten.

Die Montage des Rohrelementes 19 in dem Gehäuse 2 ist auf einfache Weise möglich, indem zunächst das fertige Abscheideelement 18 mit seinem vorderen Ende des Rohrabschnitts 28 voraus in die Abscheidekammer 11 eingeführt und in den Stutzen 15 gesteckt wird. Sofern erforderlich, sind Maßnahmen zur radialen Abdichtung zwischen dem Stutzen 15 und dem Rohrabschnitt 28 vorzusehen. Danach wird das Gehäuseteil 6 in Richtung auf das Gehäuseteil 7 zu geführt und der Stutzen 9 am Einlass 8 auf die Hülse 32 gesteckt, wobei ebenfalls Maßnahmen zur radialen Abdichtung getroffen werden können. Das Gehäuseteil 6 wird so weit in Richtung auf das Gehäuseteil 7 bewegt, bis ein vorderer Rand 33 des Gehäuseteils 6 in eine Nut 34 des Gehäuseteils 7 greift und dichtend mit diesem verbunden wird. Zwischen der ersten Abscheidestufe A1 und dem Gehäuseteil 7 sowie der Trennwand 20 verbleibt ein Ringraum, der eine ausreichende Durchströmung gewährleistet. Alle weiteren Bezugszeichen in Fig. 4 stimmen für gleiche Teile mit denjenigen der Fig. 1 bis 3 überein.

Der Kraftstoff strömt in den Wasserabscheider 1 durch den Einlass 8 in Richtung des Pfeils S1 und gelangt durch die Hülse 32 in den Innenraum des Stützkörpers 20. Wegen der Trennwand 27 tritt der Kraftstoff gemäß Pfeil S2 durch die als Langlöcher gestalteten Öffnungen (vgl. Fig. 2 und 3) und weiter in radialer Richtung durch das Abscheidemedium 22 und die Halbschalen 23, 24 in den zwischen den Halbschalen und der Innenwand des Gehäuseteils 7 sowie der Trennwand 10 gebildeten Ringraum. Für eine gleichmäßige Beaufschlagung der ersten Abscheidestufe A1 sorgt das Element 31 zur Strömungsführung im Innenraum des Stützkörpers 20. Beim Durchtritt des Kraftstoffs mit den darin emulgierten Wasseranteilen durch das Abscheidemedium 22, das eine koaleszierende Wirkung hat, werden Wassertropfen gebildet, die auf Grund der horizontalen Anordnung des Gehäuses 2 auf die Trennwand 10 absinken. Die Wassertropfen werden entlang der Trennwand 10 geführt und gelangen durch die Öffnung 13 in den Sammelraum 12.

Der durch die Abscheidestufe A1 im Wesentlichen von den Wasserbestandteilen getrennte Kraftstoff strömt auf Grund der Saugwirkung am Ablauf 14 in den Rohrabschnitt 28, und zwar durch das die zweite Abscheidestufe A2 bildende Abscheidevlies 30 und die radialen Aussparungen 29 gemäß Pfeil S3. Da das Material des Abscheidevlies 30 eine hydrophobe Wirkung hat, werden Wasseranteile, die noch im Kraftstoff emulgiert sind, und auch bereits gebildete Wassertropfen, welche durch die Strömung mitgeführt werden, an dem Abscheidevlies 30 zurückgehalten, so dass ausschließlich Kraftstoffanteile in den Rohrabschnitt 28 und zum Ablauf 14 gelangen. Das im Sammelraum 12 gesammelte Wasser kann durch an sich bekannte Einrichtungen, die am Wasserablassstutzen 17 anschließbar sind, entfernt werden.

## Patentansprüche

1. Wasserabscheider (1), insbesondere für Kraftstoffzuführsysteme von Brennkraftmaschinen in Kraftfahrzeugen mit einer in einem Gehäuse (2) ausgebildeten Abscheidekammer (11), einem darin angeordneten Abscheideelement (18) und einem darunter angeordneten Sammelraum (12) für aus dem Kraftstoff abgeschiedenes Wasser sowie einem Zulauf (8) und einem Ablauf (14) für den Kraftstoff, wobei das Abscheideelement (18) zwei Abscheidestufen (A1, A2) umfasst, von denen die erste Abscheidestufe (A1) ein hydrophiles Filtermedium (22) enthält, wobei das hydrophile Filtermedium (22) von einem Element (35) mit einer Vielzahl von Durchtrittsöffnungen umgeben ist, das eine abströmseitige Kontur bildet und abströmseitig des Filtermediums (22) und Elements (35) Tropfen des aus dem Kraftstoff getrennten Wassers erzeugt, wobei das Element (35) ein Lochblech (36), gelochter Kunststoff oder Keramik, ein engmaschiges Sieb oder ein synthetisches Gitter ist, **dadurch gekennzeichnet, dass** das Filtermedium (22) der ersten Abscheidestufe (A1) von zwei zusammenfügbaren Elementen (35) als Halbschalen (23, 24) umgeben und durch diese befestigt ist.

2. Wasserabscheider nach Anspruch 1, **dadurch gekennzeichnet, dass** die Halbschalen (23, 24) mittels Rast- oder Clipsverbindungen miteinander verbunden sind und der Stützkörper (20) zwischen Rändern der Halbschalen (23, 34) eingespannt ist.

3. Wasserabscheider nach einem der Ansprüche 1 oder 2, **dadurch gekennzeichnet, dass** das Filtermedium (22) durch ein ein- oder mehrlagiges Material gebildet ist.

4. Wasserabscheider nach Anspruch 3, **dadurch gekennzeichnet, dass** als Material Glasfaser und/oder ein synthetischer Schaum vorgesehen ist.

5. Wasserabscheider nach einem der Ansprüche 3 oder 4, **dadurch gekennzeichnet, dass** das Material eine Wandstärke zwischen mindestens 0,5 mm und maximal 30 mm aufweist.

6. Wasserabscheider nach einem der Ansprüche 3 bis 5, **dadurch** gekenntzeichnet dass die Porengröße des Materials 0,3 µm bis 500 µm beträgt.

7. Wasserabscheider nach einem der Ansprüche 1 bis 6, **dadurch gekennzeichnet, dass** das hydrophile Filtermedium (22) auf einem mit radialen Öffnungen (21) versehenen Stützkörper (20) angeordnet ist und das Element (35) mit der Vielzahl von Durchtrittsöffnungen unmittelbar an dem Filtermedium (22) anliegt.

8. Wasserabscheider nach einem der Ansprüche 1 bis 7, **dadurch gekennzeichnet, dass** das Element (35) eine Wandstärke von < 5 mm aufweist.

9. Wasserabscheider nach einem der Ansprüche 1 bis 8, **dadurch gekennzeichnet, dass** die Durchtrittsöffnungen rund, oval, n-eckig, nierenförmig, knochenförmig, kreis- oder halbkreisförmig sind.

10. Wasserabscheider nach einem der Ansprüche 1 bis 9, **dadurch gekennzeichnet, dass** die Durchtrittsöffnungen in Durchströmungsrichtung ein Profil aufweisen, das zylindrisch, konkav, konvex oder trichterförmig ist.

11. Wasserabscheider nach einem der Ansprüche 1 bis 10, **dadurch gekennzeichnet, dass** die Oberfläche der Durchtrittsöffnungen bedingt durch den Herstellungsprozess oder durch eine nachträgliche Oberflächenbehandlung glatt ausgeführt ist.

12. Wasserabscheider nach einem der Ansprüche 1 bis 11, **dadurch gekennzeichnet, dass** die Durchtrittsöffnungen in dem Element (35) eine relative freie Fläche zwischen 15% und 65% bilden.

## Claims

1. Water separator (1), in particular for fuel delivery systems of internal combustion engines in motor vehicles with a separating chamber (11) realized in a housing (2), a separating element (18) disposed therein and a collecting chamber (12) disposed thereunder for water separated from the fuel as well as an inlet (8) and an outlet (14) for the fuel, the separating element (18) comprising two separating steps (A1, A2), the first separating step (A1) containing a hydrophilic filter medium (22), the hydrophilic filter medium (22) being surrounded by an element (35) with a plurality of openings that forms a contour at the outflow side and produces at the outflow side of the filter medium (22) and of the element (35) drops of the water separated from the fuel, the element (35) being a perforated plate (36), a perforated synthetic material or ceramic, close-meshed sieve or a synthetic grid, **characterized in that** the filter medium (22) of the first separating step (A1) is surrounded by two elements (35) as half shells (23, 24) that can be assembled and attached by these elements.

2. Water separator according to claim 1, **characterized in that** the half shells (23, 24) are connected with each other by means of snap-in or clip connections and that the support structure (20) is clamped between the edges of the half shells (23, 24).

3. Water separator according to one of the claims 1 or 2, **characterized in that** the filter medium (22) is formed by a single- or multi-layer material.

4. Water separator according to claim 3, **characterized in that** glass fiber and/or synthetic foam is provided.

5. Water separator according to one of the claims 3 or 4, **characterized in that** the material features a wall thickness between at least 0.5 mm and maximum 30 mm.

6. Water separator according to one of the claims 3 to 5, **characterized in that** the pore thickness of the material is from 0.3 µm to 500 µm.

7. Water separator according to one of the claims 1 to 6, **characterized in that** the hydrophilic filter medium (22) is disposed on a support structure (20) provided with radial openings (21) and that the element (35) butts directly against the filter medium (22) with the plurality of openings.

8. Water separator according to one of the claims 1 to 7, **characterized in that** the element (35) features a wall thickness of < 5 mm.

9. Water separator according to one of the claims 1 to 8, **characterized in that** the openings are either round, oval, n-cornered, kidney-shaped, knot-shaped, circular or semi-circular.

10. Water separator according to one of the claims 1 to 9, **characterized in that** the openings feature a profile in through-flow direction that is cylindrical, concave, convex or funnel-shaped.

11. Water separator according to one of the claims 1 to 10, **characterized in that** the surface of the openings is smooth due to the manufacturing process or to a subsequent surface treatment.

12. Water separator according to one of the claims 1 to 11, **characterized in that** the openings in the element (35) form a relative free surface between 15% and 65%.

## Revendications

1. Séparateur d'eau (1), notamment pour des systèmes d'alimentation en carburant de moteurs à combustion interne dans des véhicules automobiles, avec une chambre de séparation (11) formée dans un boîtier (2), un élément de séparation (18) placé à l'intérieur de cette chambre et, en dessous, un compartiment collecteur (12) servant à réceptionner l'eau extraite du carburant, ainsi qu'une arrivée (8) et un écoulement (14) pour le carburant, l'élément de séparation (18) comprenant deux étages de séparation (A1, A2) dont le premier étage de séparation (A1) contient un milieu filtrant hydrophile (22), le milieu filtrant hydrophile (22) étant d'un élément (35) qui est doté de plusieurs orifices de passage, forme un contour côté écoulement et génère côté écoulement du milieu filtrant (22) et de l'élément (35) des gouttes de l'eau séparée du carburant, l'élément (35) étant une tôle perforée (36), un élément en matière plastique ou en céramique perforé, un tamis à mailles serrées ou une grille synthétique, **caractérisé en ce que** le milieu filtrant (22) du premier étage de séparation (A1) est entouré par deux éléments (35) assemblables en forme de semi-monocoques (23, 24) et est fixé par ces éléments.

2. Séparateur d'eau selon la revendication 1, **caractérisé en ce que** les semi-monocoques (23, 24) sont reliées l'une à l'autre par des pièces encliquetées ou clipsées et que l'élément d'appui (20) est maintenu entre les bords des semi-coques (23, 34).

3. Séparateur d'eau selon l'une des revendications 1 ou 2, **caractérisé en ce que** le milieu filtrant (22) est constitué d'un matériau à une couche ou plusieurs couches.

4. Séparateur d'eau selon la revendication 3, **caractérisé en ce que** le matériau prévu sont des fibres de verre et/ou une mousse synthétique.

5. Séparateur d'eau selon l'une des revendications 3 ou 4, **caractérisé en ce que** le matériau a une épaisseur maximale de paroi comprise entre 0,5 mm au minimum et 30 mm au maximum.

6. Séparateur d'eau selon l'une des revendications 3 à 5, **caractérisé en ce que** la taille des pores du matériau est comprise entre 0,3 µm et 500 µm.

7. Séparateur d'eau selon l'une des revendications 1 à 6, **caractérisé en ce que** le milieu filtrant hydrophile (22) est disposé sur un élément d'appui (20) pourvu d'ouvertures radiales (21) et que l'élément (35) avec de nombreuses ouvertures de passage est appliqué directement sur le milieu filtrant (22).

8. Séparateur d'eau selon l'une des revendications 1 à 7, **caractérisé en ce que** l'élément (35) a une épaisseur maximale de paroi de < 5 mm.

9. Séparateur d'eau selon l'une des revendications 1 à 8, **caractérisé en ce que** les orifices de passage sont ronds, ovales, avec n coins, réniformes, en forme d'os, en forme de cercle ou en forme de demi-cercle.

10. Séparateur d'eau selon l'une des revendications 1 à 9, **caractérisé en ce que** les orifices de passage présentent dans le sens de passage un profil cylindrique, concave, convexe ou en forme d'entonnoir.

11. Séparateur d'eau selon l'une des revendications 1 à 10, **caractérisé en ce qu'**en raison du processus de fabrication ou d'un traitement de surface postérieur, la surface des orifices de passage est lisse.

12. Séparateur d'eau selon l'une des revendications 1 à 11, **caractérisé en ce que** les orifices de passage forment dans l'élément (35) une surface libre relative comprise entre 15 % et 65 %.
